**Europäisches Patentamt**

**European Patent Office**

**Office européen des brevets**

(19)

(11) Veröffentlichungsnummer: **0 012 228**
**A1**

(12)

# EUROPÄISCHE PATENTANMELDUNG

(21) Anmeldenummer: **79104487.8**

(51) Int. Cl.³: **A 61 C 15/00**

(22) Anmeldetag: **14.11.79**

---

(30) Priorität: **29.11.78 CH 12192/78**

(43) Veröffentlichungstag der Anmeldung: **25.06.80**
**Patentblatt 80/13**

(84) Benannte Vertragsstaaten: **AT BE DE FR GB IT LU NL SE**

(71) Anmelder: **Regensburger, Werner, Gässelistrasse 5, CH-9443 Widnau (CH)**

(72) Erfinder: **Regensburger, Werner, Gässelistrasse 5, CH-9443 Widnau (CH)**
Erfinder: **Lippuner, Werner, Eberliswies, CH-9436 Balgach (CH)**

(74) Vertreter: **Hefel, Herbert, Dipl.-Ing., Egelseestrasse 65a, Postfach 61 A-6800 Feldkirch (AT)**

---

(54) **Zahnpflegegerät.**

(57) Es sind Zahnpflegeräte in Form von Zahnstochern bekannt. Um auch an schwer zugänglichen Stellen oder bei enger Zahnstellung eine Reinigung zu ermöglichen, wird eine Säuberungsklinge (1) in Form eines blattförmigen Metall- oder Kunststoffteiles vorgeschlagen. An einen Halte- bzw. Befestigungsabschnitt (2) schließt ein Reinigungsabschnitt (3) mit einer Säuberungsspitze (4) an, wobei der Reinigungsabschnitt (3) an seinem vordersten Bereich verjüngt und kurvenbegrenzt ausgebildet ist. Die Seitenbegrenzungen (5) schließen dabei einen Winkel ($\alpha$) von weniger als 180° ein. Im Halte- bzw. Befestigungsabschnitt (2) können eine oder mehrere Öffnungen (8) vorgesehen sein. Diese Säuberungsklinge (1) kann in einem Halter, welcher zugleich auch einen Handgriff bilden kann, oder in einem Multipack und in einer Reißhülle gelagert sein. Die Säuberungsklinge (1) kann als sterile Einwegklinge oder als Dauerklinge eingesetzt werden.

EP 0 012 228 A1

- 1 -

Die Erfindung bezieht sich auf ein Zahnpflegegerät in Form einer Säuberungsklinge mit einem Halte- bzw. Befestigungsabschnitt und einem daran anschließenden Reinigungsabschnitt.

Es sind verschiedene Zahnreiniger (Zahnstocher) bekannt geworden, die in der Regel aus Holz mit einer Mehrkantspitze ausgeführt sind. Mit diesen Zahnreinigern können Speisereste aus Zahnspaltstellen entfernt werden. Bei diesen bekannten Zahnpflegegeräten ist die Säuberungsform der Spitze meist nicht den anatomischen Gegebenheiten im Gebiß angepaßt. Auch ist die Lagerung dieser Holz- und Kunststoffzahnreiniger nicht immer als hygienisch zu bezeichnen. Aus diesen Gründen entstehen oft Zahnfleischverletzungen und unzureichende Säuberung der Spaltstellen zwischen den Zähnen. Zudem bleiben oft Reste von solchen Zahnstochern in denkbar ungünstigen Stellen zwischen den Zähnen und können neben Schmerzen auch gefährliche Infektionen auslösen. Selbst mit Zahnpflegegeräten, wie Zahnbürste und ähnlichem, sind manche Speisenreste nicht aus den Zahnspaltstellen zu entfernen.

Der Erfindung liegt die Aufgabe zugrunde, mittels eines entsprechend gestalteten Zahnpflegegerätes eine optimale Reinigung der Zahnspaltstellen zu ermöglichen.

Erfindungsgemäß gelingt dies dadurch, daß zumindest der Reinigungsabschnitt der Säuberungsklinge aus einem blattförmigem Metall- oder Kunststoffteil gebildet ist, wobei der Reinigungsabschnitt eine gegenüber dem Halte- bzw. Befestigungsabschnitt verjüngte, kurvenbegrenzte Säuberungsspitze aufweist.

Durch diese erfindungsgemäßen Maßnahmen wird erreicht, daß die Säuberungsklinge entsprechend dünn gestaltet ist, so daß sämtliche Zahnspaltstellen erreicht werden können.

- 2 - .

Außerdem ist durch die Verwendung von Metall- oder Kunststoffblättchen ein hygienisches Zahnpflegegerät geschaffen worden, welches auch bei Mehrfachverwendung leicht gereinigt werden kann. Durch die kurvenbegrenzte Säuberungsspitze ist eine Verletzungsgefahr ausgeschlossen, wobei trotzdem durch die verjüngte Ausbildung an der Säuberungsspitze sämtliche, bisher unzugänglichen Stellen erreicht werden können.

Die erfindungsgemäße Säuberungsklinge ist auf verschiedene Arten lager- und einsetzbar. Es ist möglich, diese als Einwegklinge in einer Reißhülle oder in einem Multipack und ferner als Dauerklinge in einem Behälter einzusetzen. Eine Reißhülle ermöglicht eine sterile Lagerung, ein Multipack und ein Etui gewährleisten durch der Säuberungsklinge angepaßte räumliche Auslegung und mittels nasenförmiger Arretier- und Transportzapfen im Inneren des Multipackgehäuses oder des Behälters eine hygienische und zweckmäßige Lagerung der Säuberungsklinge.

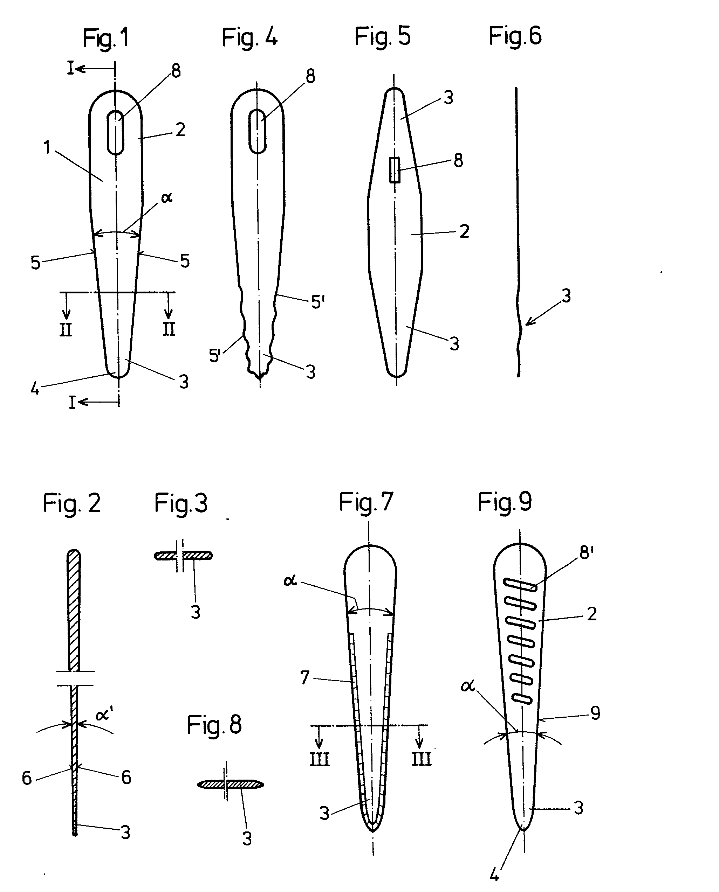

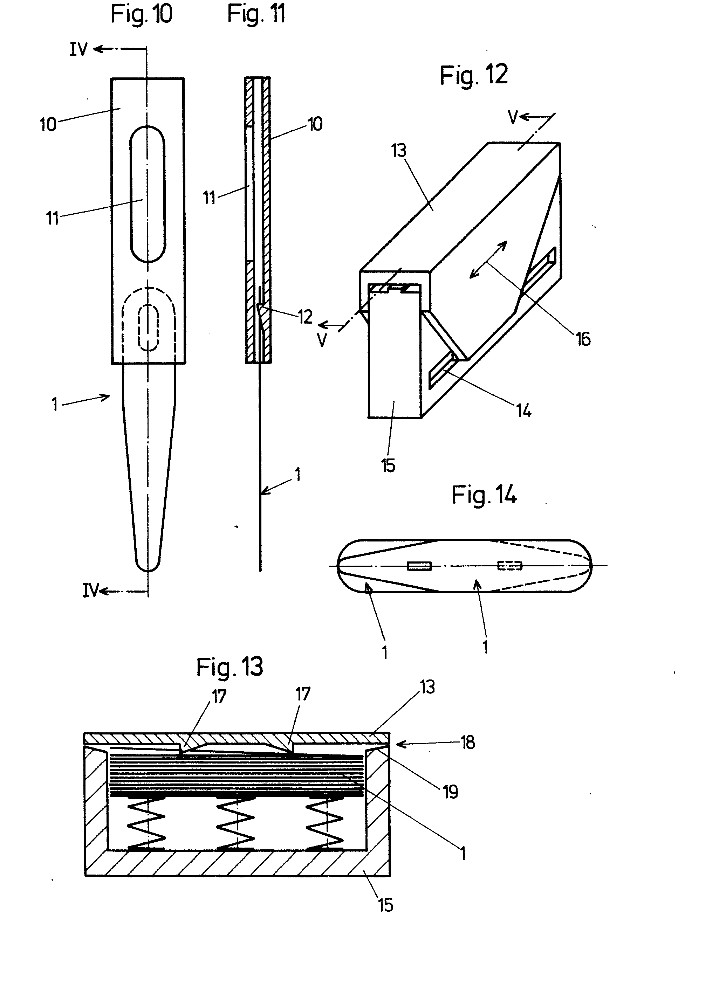

Weitere erfindungsgemäße Merkmale und besondere Vorteile werden in der nachstehenden Beschreibung anhand der Zeichnungen noch näher erläutert. Es zeigen: die Fig. 1, 4, 5, 6, 7 und 9 verschiedene Ausführungsvarianten einer Säuberungsklinge; Fig. 2 einen Schnitt nach der Linie I - I in Fig. 1, wobei jedoch der Querschnitt wesentlich vergrößert dargestellt ist; Fig. 3 einen Schnitt nach der Linie II - II in Fig. 1, wobei dieser Querschnitt ebenfalls wiederum vergrößert dargestellt ist; Fig. 8 einen Schnitt nach der Linie III - III in Fig. 7 in vergrößerter, nicht maßstäblicher Darstellung; Fig. 10 eine Ansicht eines Behälters und einer in diesem Behälter verankerten Säuberungsklinge; Fig. 11 einen Schnitt nach der Linie IV - IV in Fig. 10; Fig. 12 eine Schrägsicht eines Multipacks; Fig. 8 einen Vertikalschnitt V - V in Fig. 12; Fig. 14 eine mögliche Lagerung und Anordnung der Säuberungsklingen im Multipackgehäuse.

Bei der Säuberungsklinge 1 nach Fig. 1 ist ersichtlich, daß diese im wesentlichen aus einem Halteabschnitt 2 und einem Reinigungsabschnitt 3 besteht. Der Halteabschnitt 2 dient zur Handhabung der Säuberungsklinge und kann gegebenenfalls auch als Befestigungsabschnitt ausgebildet sein, wenn die Säuberungsklinge in einem Halter befestigt ist, wie später noch eingehend erläutert wird. Die Säuberungsklinge 1 oder zumindest der Reinigungsabschnitt 3 sind aus einem blattförmigen Metall- oder Kunststoffteil gebildet, wobei die Dicke dieses blattförmigen Teiles vorzugsweise weniger als 1 mm beträgt. Es können dadurch alle Zahnspaltstellen erreicht werden und außerdem ist die Säuberungsklinge entsprechend elastisch abbiegbar.

Der Reinigungsabschnitt weist eine gegenüber dem Halteabschnitt 2 verjüngte Säuberungsspitze 4 auf, welche durch eine Kurve begrenzt ist. Es ist dadurch jede Verletzungsgefahr ausgeschlossen. Die Seitenbegrenzungen 5 des Reinigungsabschnittes 3 schließen miteinander einen Winkel $\alpha$ von weniger als $180^{\circ}$ miteinander ein, wobei die Wahl dieses Winkels je nach Länge der Seitenbegrenzungen 5 verschieden variierbar ist. Obwohl die Säuberungsklinge aus einem blattförmigen Metall- oder Kunststoffteil gebildet ist, kann zusätzlich vorgesehen werden, daß die beidseitigen flächenhaften Begrenzungen 6 zumindest des Reinigungsabschnittes 3 einen Winkel $\alpha'$ von ebenfalls weniger als $180^{\circ}$ miteinander einschließen. In der Regel wird dies ein sehr kleiner Winkel sein, wobei dieser Winkel jedoch gerade direkt bei der Säuberungsspitze 4 entsprechend größer werden kann.

Die Seitenbegrenzungen 5 und auch die Säuberungsspitze 4 sind, wie insbesondere der Fig. 3 entnommen werden kann, entsprechend bearbeitet und abgerundet, so daß eine Verletzungsgefahr gänzlich ausgeschlossen ist.

Bei der Ausführung nach Fig. 4 sind die Seitenränder 5' zumindest des Reinigungsabschnittes 3 wellenförmig verlaufend vorgesehen, so daß dadurch beispielsweise durch Aus- und Einschieben der Säuberungsklinge hartnäckig festsitzende Speisenreste entfernt werden können. Auch ist es denkbar, eine Ausführung gemäß Fig. 6 zu wählen, bei welcher der Reinigungsabschnitt 3 in dessen Längserstreckung gesehen wellenförmig verläuft. Auch dadurch können besondere Reinigungseffekte erreicht werden.

Je nach den besonderen Erfordernissen oder nach entsprechendem Wunsch des Benützers kann zumindest der Reinigungsabschnitt der Säuberungsklinge eine Oberflächenveredelung oder -beschichtung aufweisen. Eine nachträgliche Reinigung der Säuberungsklinge ist dadurch eventuell erleichtert, obwohl auch bei Verwendung von Metallen, wie legierten Stählen, Bundmetallen oder auch bei Verwendung von Kunststoff eine Reinigungsmöglichkeit sehr einfach gegeben ist.

Bei der Ausführung gemäß Fig. 7 ist der Randbereich 7 zumindest des Reinigungsabschnittes 3 zur Bildung einer Schwertform geprägt. Der diesbezüglich erreichte Querschnitt ist der Fig. 8 zu entnehmen. Es wird dadurch nicht nur eine zusätzliche Verfestigung des Randbereiches der Säuberungsklinge erreicht, sondern auch eine bessere Zugänglichkeit gerade im Übergangsbereich des Zahnhalses in das Zahnfleisch ermöglicht.

Gemäß der Ausbildung nach Fig. 5 schließt an beiden Enden des Halteabschnittes 2 ein Reinigungsabschnitt 3 an. Eine solche Ausführung ist insbesondere dann zweckmäßig, wenn beispielsweise verschieden dicke Reinigungsabschnitte gewünscht sind, so daß beispielsweise der eine Abschnitt für kleinere und der andere für größere Zahnlücken Verwendung finden kann.

Aus den Fig. 1, 4 und 5 ist ersichtlich, daß der Halte- bzw. Befestigungsteil 2 und/oder der Reinigungsteil 3 mit einer oder mehreren Öffnungen 8 versehen sind. Diese Öffnungen dienen in der Regel zum Einhängen in einen entsprechenden Halter oder auch zur besseren Handhabung.

Bei der Ausgestaltung nach Fig. 9 sind mehrere, annähernd quer zur Längserstreckung des Halteteiles 2 und parallel zueinander verlaufende Schlitze 8' vorgesehen, durch welche die Griffigkeit der Säuberungsklinge wesentlich verbessert wird. Bei dieser Ausführung nach Fig. 9 ist auch ersichtlich, daß die Säuberungsspitze 4 des Reinigungsabschnittes 3 nach einer Parabelform verjüngt ist. Selbstverständlich kann für die Reinigungsspitze jede andere Kurvenform verwendet werden, so beispielsweise auch eine Kreisform oder eine Ellipsenform usw.

Bei den Ausführungen nach den Fig. 7 und 9 sind die Säuberungsklingen über einen Großteil deren Länge von einen spitzen Winkel $\alpha$ miteinander einschließenden Seitenrändern 7 und 9 begrenzt. Im Gegensatz dazu sind ja die Ausführungen gemäß den Fig. 1, 4 und 5 teilweise geradlinig begrenzt, zumindest die Halteabschnitte 2. Selbstverständlich ist es auch möglich, die gesamten Säuberungsklingen schmaler auszubilden und praktisch mit über deren ganze Länge parallel verlaufenden Begrenzungen auszustatten, wobei dann lediglich die Säuberungsspitze selbst entsprechend verjüngt und kurvenförmig begrenzt ausgebildet ist. Auch ist es denkbar, an einen relativ breiten Halteabschnitt ein schmaler fortsetzender Reinigungsabschnitt vorzusehen, wobei dieser schmalere Reinigungsabschnitt ebenfalls bis zur Säuberungs-

- 6 -

spitze hin von parallelen Rändern begrenzt ist.

Zur besseren Griffigkeit des Halte- bzw. Befestigungsabschnittes 2 kann die Säuberungsklinge an der entsprechenden Oberfläche gerändelt oder gerippt ausgeführt sein. Auch ist es möglich, an dem Griffbereich eine entsprechende Beschichtung mit Oberflächenrauhigkeit vorzusehen.

Die Fig. 10 und 11 zeigen ein Ausführungsbeispiel eines Behälters zur Aufnahme und für den Transport einer Säuberungsklinge 1. Dieser Behälter 10 hat eine Öffnung 11 für den Vorschub der Säuberungsklinge 1. Es kann dadurch durch Aufdrücken mit einem Finger der Vortransport der Säuberungsklinge 1 in die vorgeschobene Stellung bewirkt werden. Für die Arretierung der Säuberungsklinge 1 ist eine Nase oder Erhöhung 12 im Behälter 10 vorgesehen, welche in die Öffnung 8 am Halte- bzw. Befestigungsteil 2 der Säuberungsklinge 1 einrastet.

Bei der Ausführung nach den Fig. 12 bis 14 handelt es sich um einen Multipack, wobei ein Schieber 13 in seitlichen Nuten 14 des Behälters 15 verankert und geführt ist. Durch die Hin- und Herbewegungen in den Pfeilrichtungen 16 in Längsrichtung des Multipacks wird jeweils eine Säuberungsklinge 1 freigegeben. Die Säuberungsklingen sind wie in Fig. 14 dargestellt gelagert. Durch diese Lagerung können Nasen 17 in die Öffnungen 8 der Säuberungsklingen 1 einrasten. Bei Längsbewegung des Schiebers 13 wird je nach der Schieberichtung eine Klinge rechts oder links über den Steuerschlitz 18 und die Rückhaltenase 19 freigegeben.

Die Säuberungsklingen können also in irgendeinem Behälter unverlierbar gelagert und/oder mechanisch verankert sein. Es ist aber auch möglich, aus einem Multipack die Säuberungsklingen entsprechend auszugeben, wobei auch Möglichkeiten vorgesehen werden können, daß die Säuberungsklingen wiederum in die Behälter zurückgesteckt werden können. Selbstverständlich sind hier alle denkbaren Spenderbehälter einzusetzen, welche mit Vorschubelementen, wie z. B. Federn, Schiebernasen, Rollen od. dgl. ausgestattet sind.

Es ist möglich, die Säuberungsklingen in hermetisch abgeschlossenen, aneinanderhängenden Reißhüllen steril und zweckmäßig zu lagern. Ferner ist es denkbar, die Säuberungsklingen als Zusatz in anderen Geräten oder Behältern, wie Zahnbürsten, Zahnbürstenbehälter usw. zu lagern oder zu verankern.

Durch die den Zahnspaltstellen anatomisch angepaßte Form der Säuberungsspitze und gegebenenfalls eines rostfreien Stoffes der Säuberungsklinge sowie durch die hygienische Verpackung ist eine Verletzung und Infektion der Bedienungsfinger sowie des Zahnfleisches praktisch ausgeschlossen. Es können sowohl schmale als auch relativ breite Zahnspaltstellen entsprechend optimal gereinigt werden.

– 1 –

Patentansprüche:

1. Zahnpflegegerät in Form einer Säuberungsklinge mit einem Halte- bzw. Befestigungsabschnitt und einem daran anschließenden Reinigungsabschnitt, dadurch gekennzeichnet, daß zumindest der Reinigungsabschnitt (3) der Säuberungsklinge (1) aus einem blattförmigen, weniger als 1 mm dicken Metall- oder Kunststoffteil gebildet ist, wobei der Reinigungsabschnitt (3) eine gegenüber dem Halte- bzw. Befestigungsabschnitt (2) verjüngte, kurvenbegrenzte Säuberungsspitze (4) aufweist.

2. Zahnpflegegerät nach Anspruch 1, dadurch gekennzeichnet, daß die Seitenbegrenzungen (5) bzw. die Begrenzungsflächen (6) des Reinigungsabschnittes (3) gegen die Säuberungsspitze (4) hin einen Winkel ($\alpha, \alpha'$) von weniger als $180^\circ$ miteinander einschließen.

3. Zahnpflegegerät nach den Ansprüchen 1 und 2, dadurch gekennzeichnet, daß die Seitenränder (5') zumindest des Reihigungsabschnittes (3) der Säuberungsklinge (1) kurvenförmig bzw. wellenförmig verlaufen.

4. Zahnpflegegerät nach den Ansprüchen 1 und 2, dadurch gekennzeichnet, daß der Reinigungsabschnitt (3) in dessen Längserstreckung gesehen kurvenförmig bzw. wellenförmig verläuft (Fig. 6).

5. Zahnpflegegerät nach Anspruch 1 und einem der vorhergehenden Ansprüche, dadurch gekennzeichnet, daß der Randbereich (7) des Reinigungsabschnittes (3) zur Bildung einer Schwertform geprägt ist (Fig. 7 und 8).

HE 6360                                             6/sa/2

- 2 -

6. Zahnpflegegerät nach Anspruch 1, dadurch gekennzeichnet, daß an beiden Endbereichen des Halte bzw. Befestigungsabschnittes (2) ein verjüngter Reinigungsabschnitt (3) anschließt.

7. Zahnpflegegerät nach Anspruch 1 und einem der vorhergehenden Ansprüche, dadurch gekennzeichnet, daß der Halte- bzw. Befestigungsteil )2) und/oder der Reinigungsteil (3) mit einer oder mehreren Öffnungen (2, 3') versehen ist.

8. Zahnpflegegerät nach Anspruch 1 und einem der vorhergehenden Ansprüchen, dadurch gekennzeichnet, daß wenigstens der Reinigungsabschnitt (3) der Säuberungsklinge (1) eine Oberflächenveredelung oder -beschichtung aufweist.

9. Zahnpflegegerät nach Anspruch 1 und einem der vorhergehenden Ansprüche, dadurch gekennzeichnet, daß der Halte- bzw. Befestigungsabschnitt (2) an seiner Oberfläche gerändelt, gerippt oder beschichtet ausgeführt ist.

10. Zahnpflegegerät nach Anspruch 1 und einem der vorhergehenden Ansprüche, dadurch gekennzeichnet, daß die Säuberungsklinge (1) zumindest mit ihrem Halte- bzw. Befestigungsteil (2) in einem Halter, einem Multipack, einer Reißhülle oder einem sonstigen Behälter (10, 15) unverlierbar gelagert und/oder mechanisch verankert ist.

Fig. 1  Fig. 4  Fig. 5  Fig. 6

Fig. 2  Fig. 3  Fig. 7  Fig. 9

Fig. 8

HE 6360/61

Fig. 10     Fig. 11

Fig. 12

Fig. 14

Fig. 13

HE 6360/61

Europäisches
Patentamt

**EUROPÄISCHER RECHERCHENBERICHT**

Nummer der Anmeldung

EP 79 104 487.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CH – A – 211 202 (MAUMARY) <br> * ganzes Dokument * <br> –– | 1-3, <br> 7-9 |
| X | DE – U – 7 040 337 (HABENICHT) <br> * Ansprüche 1, 2, 5; Seiten 3 bis 5; <br>   Fig. 2, 5, 6 * <br> –– | 1,2,6, <br> 9,10 |
| X | DE – U – 1 601 788 (BODENSTEIN) <br> * ganzes Dokument * <br> –– | 1,2, <br> 7,10 |
| X | DE – U – 6 753 251 (HASELMEIER) <br> * Seite 1, Zeilen 3 und 4 von unten; <br>   Fig. 3, Position C * <br> –– | 1,2, <br> 10 |
| X | FR – A – 1 138 168 (ORTWEIN) <br> * ganzes Dokument * <br> –– | 1,10 |
|  | FR – A – 612 466 (SPANIER) <br> * ganzes Dokument * <br> –– | 1,3,7, <br> 10 |
|  | DE– U – 1 682 340 (SCHMOLZ) <br> * Ansprüche 1 bis 3 * <br> –– | 1,4, <br> 7,10 |
|  | US – A – 3 771 537 (SCHOLE) <br> * Spalte 2, Zeilen 47, 48; Fig. 3, <br>   Positionen 20, 21 * <br> –––– | 1,5 |

**KLASSIFIKATION DER ANMELDUNG (Int.Cl.3)**

A 61 C   15/00

**RECHERCHIERTE SACHGEBIETE (Int. Cl.3)**

A 61 C   15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 04-03-1980 | DROPMANN |

EPA form 1503.1   06.78